**Europäisches Patentamt**

**European Patent Office**

**Office européen des brevets**

(19)

(11) Publication number: **0 104 854**
**A2**

(12) # EUROPEAN PATENT APPLICATION

(21) Application number: **83305478.6**

(22) Date of filing: **19.09.83**

(51) Int. Cl.³: **G 01 V 3/08**

(30) Priority: 28.09.82 US 426019
28.09.82 US 426028
28.09.82 US 426030

(43) Date of publication of application:
**04.04.84 Bulletin 84/14**

(84) Designated Contracting States:
**DE GB NL**

(71) Applicant: **MOBIL OIL CORPORATION**
**150 East 42nd Street**
**New York New York 10017(US)**

(72) Inventor: **Hoehn, Gustave Leo, Jr.**
**3512 South Franklin Street**
**Dallas Texas 75233(US)**

(74) Representative: **West, Alan Harry**
**Mobil Court 3 Clements Inn**
**London WC2A 2EB(GB)**

(54) Method for the magnetization of well casing.

(57) A magnetic field is induced in a well casing. The location of this field may then be sensed while drilling another well and the direction of drilling modified in response to the sensed location of the first well. This allows one to either avoid or intersect the first well with the second well.

EP 0 104 854 A2

F-1839(1840,1841)                    -1-

## METHOD FOR THE MAGNETIZATION
## OF WELL CASING

The borehole of producing oil and gas wells is typically lined from top to bottom with steel casing anchored by a sheath of cement that is securely and circumferentially bonded to both the casing and the wall of the wellbore.  Offshore wells are sometimes abandoned with no equipment projecting above the water surface.  Oftentimes wells are drilled at extreme depths with the drilled wellbore deviating substantially from the vertical.  There is, therefore, the need for a reliable method of locating the wellhead of such abandoned offshore wells or for locating the bottom of a deviated well, especially in the case of a well blowout when a relief well is to be drilled to intersect the deviated well at a point above or near the blowout.

Other similar situations arise when the exact location of the well is needed, such as reliably locating the wellbore of a production well when a new well is being drilled in its vicinity in order to prevent drilling into the producing well.  Location of a well is also required in case of a blowout in a production well where drilling of an intersecting relief well from a remote surface location is required to relieve the pressure and kill any resulting fires.

In one conventional drilling practice, the direction and position of the production wellbore was determined at the time of drilling by running hole direction surveys and processing the directional data for wellbore position.  The directional measurements are commonly made using a magnetic compass and inclinometer.  The standard deviation of these directional measurements is not accurately known, but is probably greater than the resolution of the instruments.  There are other random errors due to instrument friction and mounting instability, tool alignment in the wellbore, gravity perturbations, magnetic variation uncertainty, magnetic disturbance of the drill pipe, etc.  In addition to these random errors, there are bias errors.  The largest bias error is probably in the compass reading caused mostly by poor calibration and the drill pipe magnetic disturbance. The total directional bias error can range up to a few degrees or even more.

Another method that has been used in such well location efforts is by searching with a magnetometer in the well being drilled for the magnetic anomaly created by the well casing of the producing well. The natural magnetization of the well casing due to the earth's magnetic field produces an anomaly in the total magnetic field which may be detected with a proton magnetometer at distances up to a few hundred feet.

In accordance with the present invention there is provided a method for magnetizing well casing by means of an internal magnetizer being advanced through the well casing to create a magnetic anomaly along such well casing. The direction of the magnetic field of the magnetizer travels through the well casing so as to create a plurality of magnetic flux leakage points along the well casing. The distance between the magnetic flux leakage points is such that a desired magnetic field strength is created along the well casing at a desired radial distance outward from the well casing. More particularly, the desired magnetic field strength is created at a radial distance outward from the well casing at least equal to the distance between the magnetic flux leakage points.

The present invention further provides a method of drilling intersecting wells. A first well is directionally drilled toward an intersect position along a second well having its casing magnetized at least along that portion of the second well to be intersected by the first well. The anomaly of the magnetized casing of the second well at the intersect position is sensed from a position within the first well as the directional drilling of the first well approaches the second well. The drilling of the first well is directed toward the intersect position on the second well in response to the sensed anomaly.

The sensing of the anomaly of the second well includes the detection of magnetic flux leakage at a plurality of spaced apart locations along the casing of the second well, such magnetic flux leakage being detectable at a distance at least equal to the distance between each of such plurality of spaced apart locations.

In a further aspect of the invention, the directional drilling of the first well may be directed away from a possible intersection with a second well in response to the sensed anomaly.

Figure 1 illustrates a well casing being magnetized in accordance with the present invention.

Figure 2 illustrates the magnetic anomaly created by the magnetized well casing of Figure 1.

Figure 3 illustrates the magnetic anomaly of the well casing of Figure 1 as a function of distance into the formation surrounding the well casing.

Figure 4 illustrates a downhole sonde for injecting current into a well casing in accordance with the present invention.

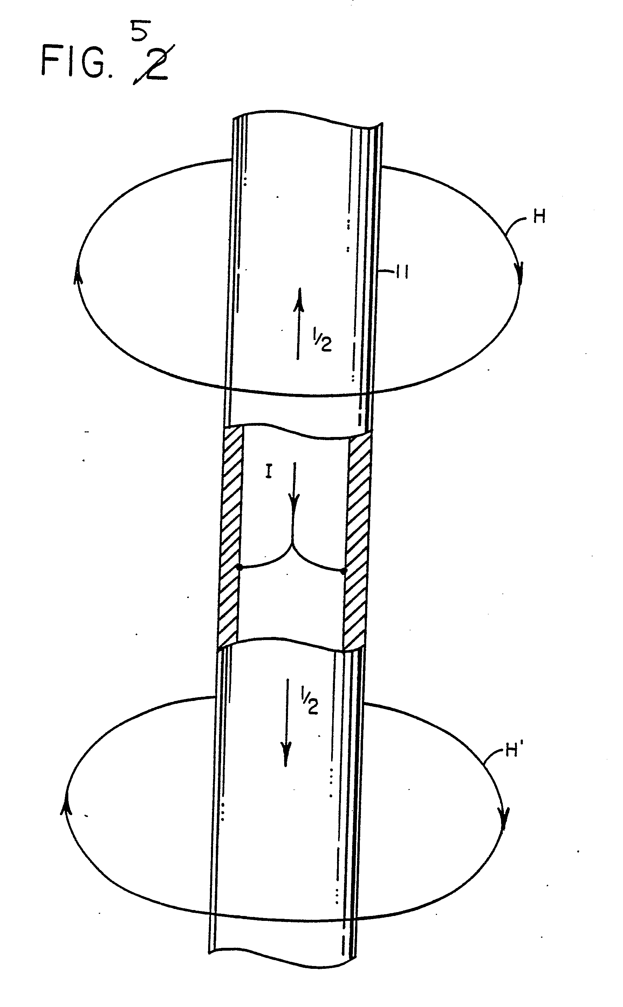

Figure 5 illustrates the flow of current injected into the well casing of Figure 1.

Figure 6 illustrates the directional drilling of one well to another, such as a relief well to intersect a blowout well.

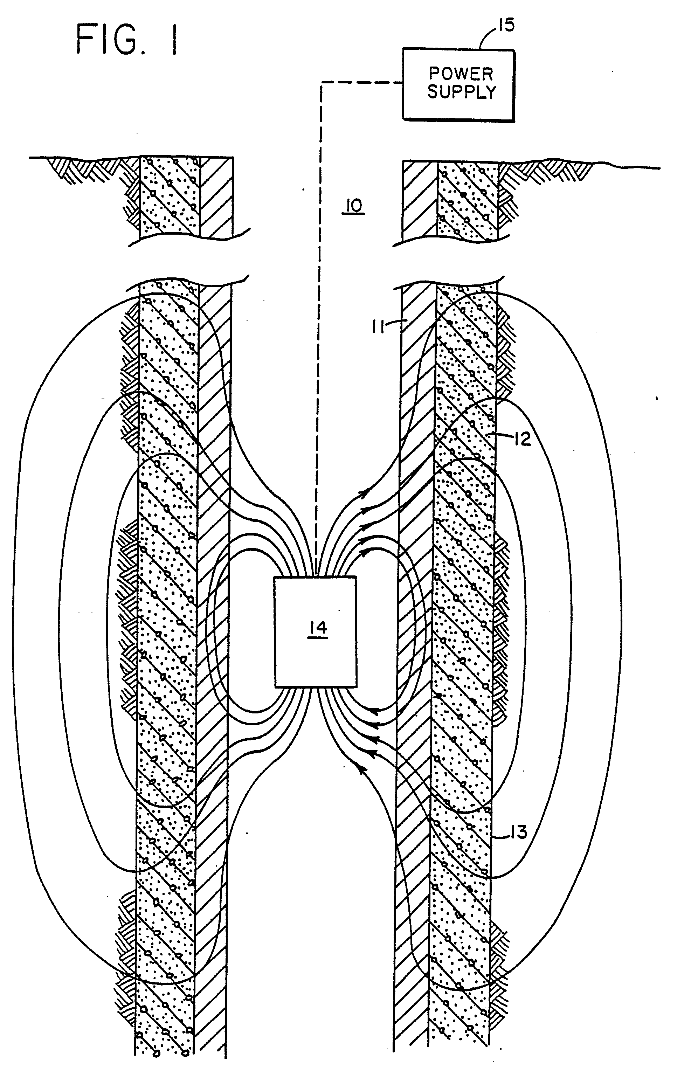

A typical wellbore 10 is shown in Figure 1 lined with steel casing 11 and anchored by a sheath of cement 12 which is circumferentially bonded to both the casing 11 and the wall of the wellbore 13. An internal magnetizer, shown schematically at 14, is lowered into the casing by means of a suitable wireline cable (not shown). The magnetizer core may preferably be of soft iron wound with a number of layers of copper wire. Power is supplied to the magnetizer from an uphole power supply 15. The power can be applied to the magnetizer continuously as a D.C. voltage or can be applied in unipolar pulses from a storage capicitor. When the polarity of the power to the magnetizer is reversed, a magnetic pole develops in the casing 11. By causing these reversals to occur at several feet or more along the casing 11, a magnetic anomaly is created in the casing which can be detected by a flux gate magnetometer or other type magnetometer in a nearby wellbore being drilled or in a relief well being drilled to intersect the wellbore 10 in the event of a well blowout. With the

0104854

F-1839(1840,1841)                      -4-

polarity shown in Figure 1, the magnetization last "felt" by the casing 11 will be in the upward direction as the magnetizer 14 is advanced upward through the casing.

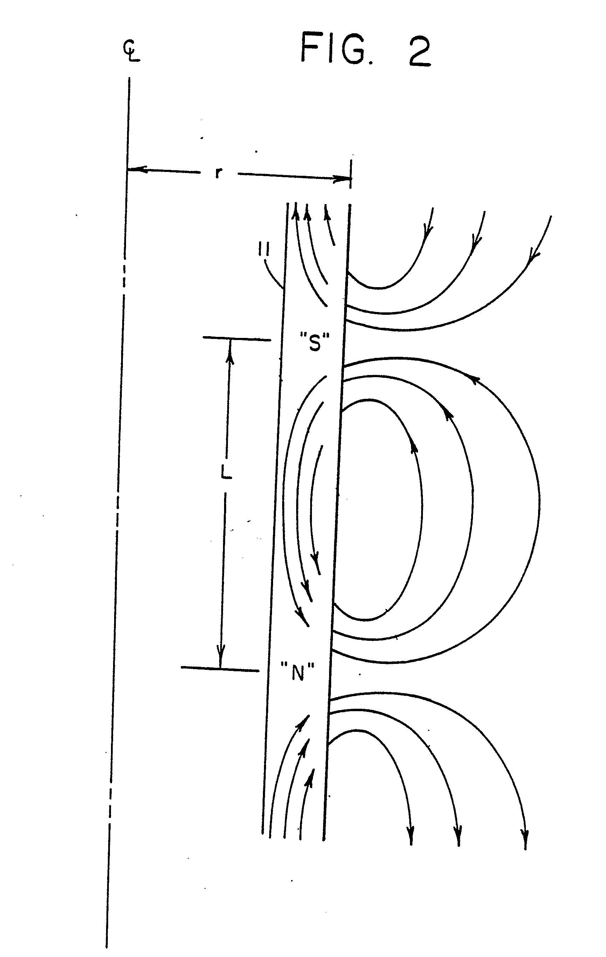

More particularly, the anomaly created by the magnetization of the casing 11 may be as illustrated in Figure 2 wherein a plurality of alternating N and S magnetic poles are spaced along the casing 11. The spacing L between such poles should be of sufficient distance to maximize the detection range of the casing from a relief well or other well into which a magnetometer is located. Although not to scale in Figure 2, the monopole spacing L is much greater than the casing radius r. Preferably the desired magnetic field strength is created at a radial distance outward from the well casing at least equal to the distance between the magnetic flux leakage points.

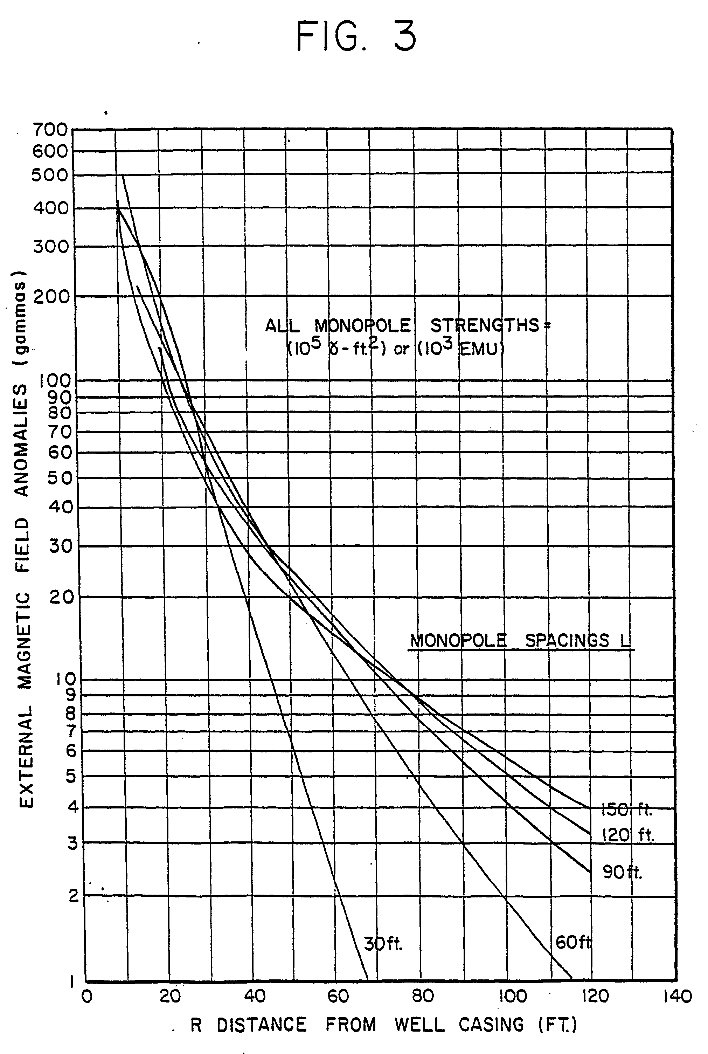

Figure 3 illustrates magnetic anomaly as a function of distance from the magnetized well casing for spaced magnetic monopoles of alternating polarity of 30 feet, 60 feet, 90 feet, 120 feet and 150 feet. It can be seen that as the spacing distance L between the monopoles is increased, the distance of detection of the anomaly from the well casing is increased. This is due to the fall of the magnetic field strength at the rate of $1/R^2$ where R is the distance from the magnetometer in the relief or other wellbore to the magnetized well casing 11 in the wellbore 10 for example.

In one example, the internal magnetizer 14 was comprised of an 18 inch Armco soft iron core of 1 1/4 inch diameter with a two layer winding of #16 copper wire. A monopole magnetic pole strength of 1.8 x $10^5$ alpha-ft$^2$ (on 1.8 x $10^3$ cmu) was produced with a 30 volt D.C. pulse supplied to the magnetizer from the capacitive discharge of the uphole power supply.

In lieu of magnetizing the well casing after it has been located and cemented in the wellbore, the casing could be magnetized on the earth's surface as it is being lowered into the wellbore. Also pulsed power may be utilized in magnetizing the casing in lieu of D.C. power.

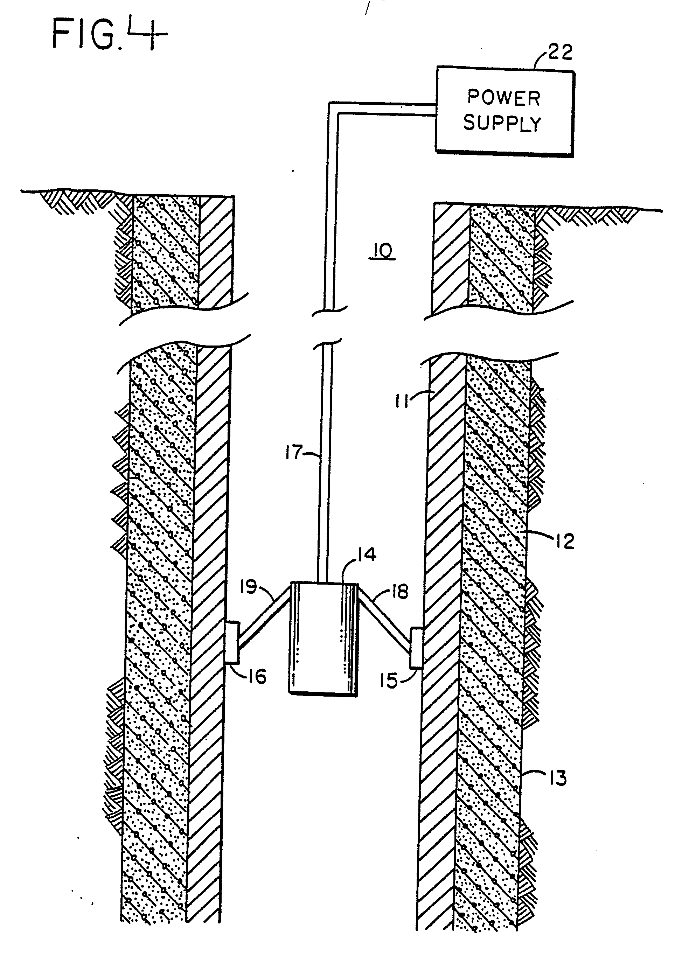

Figure 4 illustrates an alternate method for magnetizing the well casing in acocrdance with the invention.

As the magnetizer, a current sonde 14 with releasable contact pads 15 and 16 is employed and is lowered through the casing 11 to a desired depth by means of the insulated cable 17. At the desired location, the pads 15 and 16 are equipped with current emitting electrodes which make contact with the well casing 11. Current supplied from the uphole power supply 22 passes through the sonde 14 and the contact pads 15 and 16 into the well casing 11 at the desired depth location. At this depth location about one-half the current flows up the casing 11 while about one-half the current flows down the casing 11 as illustrated in Figure 2. There is also a small leakage current to the formation per unit length of casing. As can be further seen in Figure 2, the upward current flow in casing 11 subtracted from the cable current I generates a magnetic field H in a first direction about the casing while the downward current flow generates a magnetic field H' approximately equal to H in the same direction about the casing. In this manner, such magnetic fields can be generated about a production well at a desired depth or deviation of direction and can be detected by a magnetometer located such as in a non-magnetic section of the drill string in a new well being drilled nearby.

The current injection point should be as close to the likely intersection point between the two wells as possible. The further the injection point is from the desired depth point, the weaker the magnetic field will be at the desired depth point. If the current were injected at a point on the casing near the surface of the earth, the current would be attenuated rapidly with depth due to leakage through the surrounding formations. For example, with one ampere of current injected into the casing at the surface of the earth, about $10^{-7}$ amperes would be flowing in the casing at a depth of about 10,000 feet. The magnetic field created at 10,000 feet is thus greatly reduced. However with one ampere of current injected at the 10,000 foot depth in accordance with the present invention, about one-half
ampere of current will be flowing in each direction in the casing with
a much larger resulting magnetic field.

Either AC or DC current could be applied to the well casing to
create the desired magnetic field.  When drilling a new well in an area
where there are several nearby producing wells each of the producing
wells may, for example, be injected with AC current of different
frequencies so as to create differing detectable magnetic fields for
each of the producing wells.

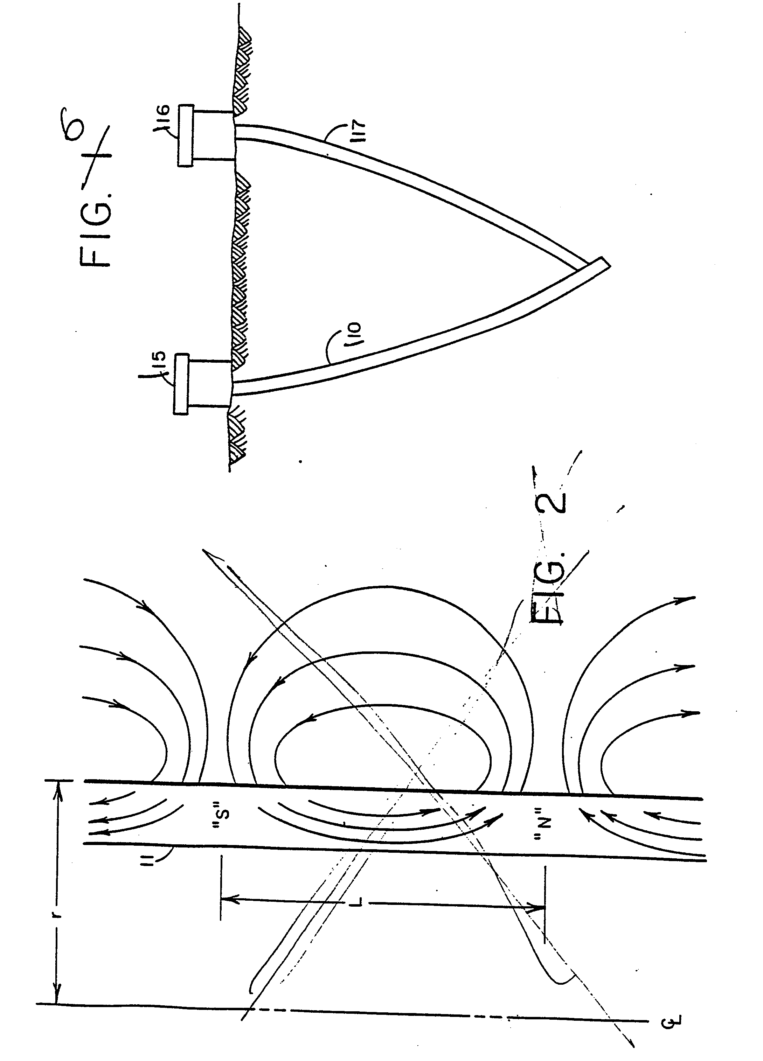

As stated previously, the method of this invention may be used
to locate a well so that a second well may be directionally drilled to
intersect it.  This is illustrated in Figure 6 which shows a blowout
well 115 with wellbore 110 and a relief well 116 with wellbore 117
having a trajectory such that it intersects the wellbore 110 of the
blowout well at a position near the bottom of the wellbore 110.  Such
an intersection near the bottom of the blowout well 110 permits the
pumping of mud or cement from the relief well into the blowout well
through the producing formation in order to kill the blowout.

The casing of the wellbore 110 has been magnetized before
blowout occurs.  A flux gate magnetometer located near the bottom of
the relief well being drilled senses for the magnetic anomaly provided
by the previously magnetized casing of the blowout well as the
directional drilling of the relief well approaches the desired
intersection with the blowout well.  This directional drilling is then
redirected as necessary to the desired intersect location.

CLAIMS:

1.    A method of magnetizing a well casing, comprising the steps of:

(a)    advancing a magnetizing means through the well casing to create a magnetic anomaly along the casing, and

(b)    periodically reversing the direction of the magnetic field of the magnetizing means as the magnetizing means travels along the casing, whereby a plurality of magnetic flux leakage points are created along the casing.

2.    The method of claim 1 wherein the distance between the magnetic flux leakage points is such that a desired magnetic field strength is created along the casing at a desired radial distance outward from the casing.

3.    The method of claim 1 or 2 wherein the desired magnetic field strength is created at a radial distance outward from the casing at least equal to the distance between the magnetic flux leakage points.

4.    The method of claim 1, 2 or 3 wherein the magnetization of the well casing is carried out after the well casing has been set within the wellbore.

5.    The method of Claim 1, 2 or 3 wherein the magnetization of the well casing is carried out as the well casing is being lowered into the wellbore.

6.    A method of magnetizing a well casing, comprising injecting a current flow into the well casing at a select depth point such that one half the current flow is up the well casing from the point of injection and one half the current flow is down the well casing from the point of injection.

7.    The method of claim 6 wherein injected current is either direct or alternating current.

8.    The method of claim 6 or 7 wherein alternating current of a select frequency is injected so as to create a magnetic field which may be distinguished from those present in nearby well casings which have been magnetizied with current of a different frequency.

9.    A method of directionally drilling a first well to intersect a second well comprising:
        (a)  magnetizing the casing of the second well at least along that portion of the well to be intersected by the first well;
        (b)  magnetically sensing from a position within the first well for the magnetized casing of the second well; and
        (c)  directing the drilling of the first well toward the intersect position along the second well.

10.   The method of claim 9 wherein the step of magnetically sensing for the casing of the second well at the intersect position includes the determination of the distance and direction of the first well to the intersect position on the second well.

11.   The method of claim 9 wherein the step of magnetically sensing the magnetized casing of the second well during directional drilling of the first well comprises the detction of magnetic flux leakage from the casing of the second well.

12.   A method for preventing the drilling of a first well into a second well comprising:
        (a)  magnetizing the casing of a second well;
        (b)  magnetically sensing from a position within the first well for a magnetized casing of the second well; and
        (c)  redirecting the drilling of the first well in response to a sensor reading which indicates that continued drilling of the first well would result in the intersection of the first and second wells.

13.  The method of claim 12 wherein the magnetizing of the second well is accomplished by injecting a current flow into the well casing of the second well at a select depth point such that one half the current flow is up the well casing from the point of injection and one half the current flow is down the well casing from the point of injection.

1532H/00054H

FIG. 1

0104854

POWER SUPPLY  15

10

11

12

14

13

FIG. 2

FIG. 3

0104854

FIG.4

POWER SUPPLY

0104854

FIG. 2

0104854

FIG. 1

FIG. 2